# EUROPÄISCHE PATENTANMELDUNG

(11) **EP 3 622 854 A1**
(43) Veröffentlichungstag der Anmeldung: **18.03.2020**
(21) Anmeldenummer: 19185227.6
(22) Anmeldetag: 09.07.2019
(51) Int. Cl.: A47B 47/00, F16B 12/42

(54) **MÖBEL MIT EINEM RAHMENGESTELL AUS ÜBER EINEN ECKVERBINDER VERBUNDENEN ROHRRAHMEN**

(30) Priorität: 13.09.2018 DE 202018105258 U
(71) Anmelder: Naber Holding GmbH & Co. KG, 48529 Nordhorn (DE)
(72) Erfinder: Sagel, Thomas, 33034 Brakel-Erkeln (DE); Naber, Hans-Joachim, 48527 Nordhorn (DE)
(74) Vertreter: Angerhausen, Christoph

(57) **Zusammenfassung**

Die Erfindung betrifft ein Möbel (1) mit einem Rahmengestell (2) aus mehreren Rohr- oder Profilrahmen (3), von denen mindestens zwei Rohr- oder Profilrahmen (3) in einem Eckbereich des Rahmengestells (2) über einen mehrteiligen Eckverbinder (4) miteinander verbunden sind, wobei der Eckverbinder (4) ein erstes und ein zweites Teil (6, 7) aufweist, die lösbar miteinander verbunden und zwischen denen die mindestens zwei Rohr- oder Profilrahmen (3) gehalten sind, und wobei eines von erstem und zweitem Teil (6, 7) an einer von dem Rahmengestell (2) abgewandten Seite eine mechanische Schnittstelle (29) für die Befestigung eines Anbauteils (5) aufweist.

## Beschreibung

Die Erfindung betrifft ein Möbel mit einem Rahmengestell aus über mindestens einen Eckverbinder verbundenen Rohr- oder Profilrahmen.

Rohrmöbel weisen häufig an ihren Ecken Eckverbinder auf, über welche die Enden einzelner Rohrstreben miteinander verbunden sind. Bei einem im Wesentlichen quaderförmigen Möbel sind häufig beispielsweise im Eckbereich drei senkrecht zueinander stehende Rohrstreben über einen Eckverbinder miteinander verbunden. Derartige Anordnungen sind beispielsweise aus der DE 20 2011 110 083 U1 und aus der DE 3930614 A1 bekannt.

Die aus dem Stand der Technik bekannten Rohrmöbel haben den Nachteil, dass über die Eckverbinder allein in der Regel nicht die erforderliche Stabilität der Konstruktion sichergestellt werden kann, da die Eckverbinder aus ästhetischen Gründen auch nicht zu massiv ausgebildet werden sollen. So ist es üblich, den Rohrmöbeln, insbesondere ihrem quaderförmigen Rohrrahmengestell durch Querstreben oder Seitenwandelemente zusätzliche Stabilität zu verleihen. Dies wiederum limitiert jedoch die Gestaltungsfreiheit derartiger Rohrmöbel.

Es ist daher die Aufgabe der Erfindung, ein Möbel der eingangs beschriebenen Art derart weiterzuentwickeln, dass es bei hoher mechanischer Stabilität gleichzeitig einen großen Gestaltungsfreiraum aufweist.

Diese Aufgabe wird durch ein Möbel mit den Merkmalen den Anspruchs 1 gelöst. Die abhängigen Ansprüche betreffen jeweils vorteilhafte Ausführungsformen der Erfindung.

Demgemäß wird ein Möbel der eingangs beschriebenen Art vorgeschlagen, das ein Rahmengestell aus mehreren Rohr- oder Profilrahmen aufweist, von denen mindestens zwei Rohr- oder Profilrahmen in einem Eckbereich des Rahmengestells über einen mehrteiligen Eckverbinder miteinander verbunden sind, wobei der Eckverbinder ein erstes und ein zweites Teil aufweist, die lösbar miteinander verbunden und zwischen denen die mindestens zwei Rohr- oder Profilrahmen gehalten sind, und wobei eines von erstem und zweitem Teil an einer von dem Rahmengestell abgewandten Seite eine mechanische Schnittstelle für die Befestigung eines Anbauteils aufweist.

Durch die Verwendung von Rohr- oder Profilrahmen, die über den Eckverbinder miteinander verbunden werden, anstelle von Einzelstreben, die über ihre freien Enden an dem Eckverbinder zueinander festgelegt sind, weist das erfindungsgemäße Möbel eine im Vergleich zu aus dem Stand der Technik bekannten Möbeln erhöhte Stabilität auf.

Das Anbauteil kann eine in dem Eckbereich auf dem Rahmengestell aufliegende Platte sein, die über die Schnittstelle mit dem Eckverbinder verbunden ist, wozu der Eckverbinder ein drittes Teil aufweist, das an der Platte befestigt, vorzugsweise verrastet und über die Schnittstelle an dem mindestens einen von erstem und zweitem Teil lösbar festgelegt ist. Die Schnittstelle kann beispielsweise eine Montageebene aufweisen oder sein, auf der das Anbauteil befestigt werden kann. Dazu kann die Schnittstelle etwa eine Gewindeaufnahme oder ein je nach Art des Anbauteils anderes geeignetes Befestigungsmittel aufweisen. Das Anbauteil kann etwa ein drittes Teil des Eckverbinders aufweisen, das über die Schnittstelle an dem ersten und/oder dem zweiten Teil des Eckverbinders festlegbar ist. Das Anbauteil kann etwa einen Möbelfuß, eine Transportrolle, eine Platte oder einen Halter für einen Gegenstand, beispielsweise für eine gekantete Blechplatte aufweisen.

Die Rohr- oder Profilrahmen können umlaufend geschlossene Rohr- oder Profilrahmen sein. Die Rohr- oder Profilrahmen können beispielsweise ebene Rohr- oder Profilrahmen, das heißt Rohr- oder Profilrahmen sein, die sich lediglich in zwei Raumdimensionen erstrecken und deren Abmessung in der dritten Raumrichtung allein durch einen Durchmesser des den Rohr- oder Profilrahmen bildenden Rohrs bzw. der den Rohr- oder Profilrahmen bildenden Strebe oder des den Rohr- oder Profilrahmen bildenden Profils vorgegeben ist. Der Rohr-oder Profilrahmen kann beispielsweise eine rechteckige Geometrie aufweisen, mit zwei Paaren von sich jeweils parallel zueinander erstreckenden Rohr- oder Profilabschnitten, wobei jeweils zwei in einem Eckbereich des Rohr- oder Profilrahmens aneinander grenzende Rohrabschnitte senkrecht zueinander stehen. Alternativ können die in dem Eckbereich des Rohr- oder Profilrahmens aneinander grenzenden Rohrabschnitte aber auch unter einem größeren oder kleineren Winkel zwischen etwa 10° und 170° zueinander verlaufen.

Die den Rohr- oder Profilrahmen bildenden Streben können beispielsweise Rohre, massive Stangen, Drähte oder Profile sein und müssen grundsätzlich nicht auf bestimmte Ausführungsformen beschränkt werden.

In dem Eckbereich, in dem die Rohr-oder Profilabschnitte ineinander übergehen, kann der Rohr- oder Profilrahmen gerundet ausgebildet sein. Insbesondere kann der Rohr- oder Profilrahmen im Eckbereich einen Radius aufweisen, der größer als 1 cm ist. Durch die Verwendung vergleichsweise großer Radien im Eckbereich erfährt der Rohr- oder Profilrahmen im Eckbereich keine oder nur eine geringfügige Schwächung, was weiterhin zur Stabilität des Rohr- oder Profilrahmens und damit zur Stabilität des Möbels beiträgt.

Das erste und das zweite Teil können zwischen sich je gehaltenem Rohr- oder Profilrahmen einen Kanal aufweisen, in dem der jeweilige Rohr- oder Profilrahmen formschlüssig aufgenommen ist. Das erste und das zweite Teil können an sich gegenüberliegenden Seiten jeweils eine Ausnehmung aufweisen, die bei zusammengesetzten Teilen den Kanal abgrenzen.

Der Kanal kann einen nichtlinearen Verlauf aufweisen, vorzugsweise einen runden Verlauf mit zumindest abschnittsweise konstantem Radius. Durch den nicht linearen Verlauf des Kanals ist der Eckverbinder in Bezug auf den jeweiligen Rohr- oder Profilrahmen, der in den Kanal eingesetzt ist, fest arretiert und insbesondere nicht in Erstreckungsrichtung des Rohr-oder Profilrahmens verschieblich.

Der Kanal kann an seinen in Erstreckungsrichtung gegenüberliegenden Enden zu zwei unterschiedlichen Seiten des Eckverbinders geöffnet sein. Die beiden Seiten des Eckverbinders, zu denen der Kanal geöffnet ist, können beispielsweise senkrecht zueinander ausgerichtet sein. Ein derartiger Eckverbinder ist insbesondere durch Schaffung eines kubischen Möbels geeignet. Die beiden Seiten können aber auch unter einem beliebigen anderen Winkel von vorzugsweise zwischen 10° und 170° zueinander angeordnet sein, um ein nicht kubisches Möbel zu schaffen.

Die beiden Kanäle können jeweils eine erste Öffnung aufweisen, die zu derselben Seite des Eckverbinders geöffnet sind, wobei die Kanäle jeweils eine zweite Öffnung aufweisen, die jeweils zu einer von zwei weiteren Seiten geöffnet sind, wobei die drei Seiten vorzugsweise senkrecht zueinander angeordnet sind. Ein derartiger Eckverbinder ist insbesondere für die Schaffung eines kubischen Möbels geeignet, das heißt zur Schaffung eines Rahmengestells mit kubischer Geometrie. Die drei Seiten können jedoch paarweise auch unter einem beliebigen anderen Winkel von vorzugsweise zwischen 10° und 170° zueinander angeordnet sein, um ein nicht kubisches Möbel zu schaffen.

Die mindestens zwei über den Eckverbinder miteinander verbundenen Rohr- oder Profilrahmen können jeweils ein ebener Rechteckrahmen sein, wobei der jeweilige Rechteckrahmen in seinem Eckbereich einen gerundeten Rohrverlauf aufweist

Das dritte Teil, das an der Platte befestigt ist, kann eine erste Montageebene aufweisen, über die das dritte Teil an dem mindestens einen von erstem und zweitem Teil lösbar festgelegt ist.

Das dritte Teil kann eine weitere Montageebene aufweisen, die gegenüber der ersten Montageebene zurückversetzt ist und auf welcher die Platte mit einem Flansch einer das dritte Teil umgreifenden Umkantung an ihrem Außenumfang anliegt. Dadurch kann erreicht werden, dass der Flansch mit der ersten Montageseite fluchtet oder gegenüber der ersten Montageseite zurückversetzt ist und dadurch die Montage eines weiteren Bauteils auf der ersten Montageseite ermöglicht wird. Das weitere Bauteil kann beispielsweise ein Blechteil, etwa ein Anreihverbinder oder ein Seitenwandelement sein.

Das dritte Teil kann an seiner weiteren Montageebene ein Befestigungsmittel, vorzugsweise ein Rastmittel aufweisen, das relativ zu der weiteren Montageebene zwischen einer Freigabeposition und einer Rastposition verschwenkbar ist. Das Rastmittel kann insbesondere eine Rastnase sein, die in einer Ausnehmung in der weiteren Montageebene angeordnet ist und gegenüber der weiteren Montageebene verschwenkbar ist, insbesondere zwischen einer Position, in der ein Formschlussstück an einem freien Ende der Rastnase in das dritte Teil zurückgezogen ist, und einer Rastposition, in der die Rastnase mit dem Formschlussstück über die weitere Montageebene aus dem dritten Teil herausragt. Auf diese Weise kann das Formschlussstück in der Rastposition in einer entsprechende Rastaufnahme des Flansches aufgenommen sein.

Die Platte kann beispielsweise ein Blechformteil sein, welches lediglich durch Kanten und Stanzen hergestellt ist. Beispielsweise kann die Platte an einem ihrer Ränder eine U-Umkantung aufweisen, von der ein freier Profilabschnitt am Ende der U-Umkantung den Flansch bildet, der auf der weiteren Montageebene aufliegen und daran festgelegt werden kann.

Der Flansch kann beispielsweise eine Ausnehmung, vorzugsweise eine Durchgangsbohrung aufweisen, mit welcher das Befestigungsmittel, vorzugsweise das Rastmittel, in Eingriff steht, wenn sich die Platte in Bezug auf das dritte Teil in einer Montageposition befindet. Die Ausnehmung beziehungsweise die Durchgangsbohrung kann eine Geometrie aufweisen, die zu der Geometrie eines Formschlussstücks des Befestigungsmittels, insbesondere des Rastmittels, entspricht, so dass das Befestigungsmittel, beziehungsweise das Rastmittel formschlüssig in der Ausnehmung aufgenommen werden kann, um die Platte in Bezug auf das dritte Teil in der Montageposition zu arretieren.

Die Platte kann mit einem Flansch einer Umkantung an ihrem Außenumfang das dritte Teil umgreifen, wobei zwischen dem dritten Teil und einem von erstem und zweitem Teil ein Spalt gebildet ist, in das ein Blechteil, etwa ein Seitenwandelement des Möbels eingesetzt ist.

Der Spalt kann zwischen einem Vorsprung am Außenumfang desjenigen Teils von erstem und zweitem Teil, das die Schnittstelle aufweist, und der weiteren Montageebene ausgebildet sein, wozu die weitere Montageebene senkrecht über den Außenumfang hinausragt.

Das Blechteil, insbesondere das Seitenwandelement kann mit einer L-Umkantung entlang einer horizontalen Unterkante in den Spalt eingreifen. Das dritte Teil kann an seiner ersten Montageebene ein weiteres Befestigungsmittel, vorzugsweise ein weiteres Rastmittel aufweisen, das relativ zu der ersten Montageebene zwischen einer Freigabeposition und einer Rastposition verschwenkbar ist. Das Rastmittel kann analog zu dem ersten Befestigungsmittel als eine gegenüber der Montageebene verschwenkbare Rastnase ausgebildet sein, die an ihrem freien Ende einen Formschlussadapter für die Aufnahme in einer entsprechenden Ausnehmung der L-Umkantung aufweist.

Die L-Umkantung kann eine Ausnehmung, vorzugsweise eine Durchgangsbohrung oder einen Durchbruch aufweisen, mit welcher das weitere Befestigungsmittel, vorzugsweise das Rastmittel in Eingriff steht, wenn sich die L-Umkantung in Bezug auf den Eckverbinder in einer Montageposition befindet.

Das erste und das zweite Teil können über mindestens eine erste Schraubverbindung miteinander verbunden sein. Das erste und das zweite Teil können fluchtende Durchgangsbohrungen aufweisen, über die das erste und das zweite Teil über eine weitere Schraubverbindung mit dem dritten Teil verschraubt sind.

Der erfindungsgemäße Aufbau des Möbels ermöglicht weiterhin eine einfache Montage des Möbels. Demgemäß können in einem ersten Schritt zwei Rohr- oder Profilrahmen über das erste und das zweite Teil des Eckverbinders zueinander festgelegt werden. Dazu können die beiden Teile an ihren gegenüberliegenden und aneinandergrenzenden Seiten jeweils Teilaufnahmen aufweisen, in welchen im zusammengesetzten Zustand der beiden Teile die Rohr- oder Profilrahmen im Eckbereich formschlüssig oder im Wesentlichen formschlüssig aufgenommen und aufgrund ihres im Eckbereich nichtlinearen Verlaufs bei fest miteinander verbundenen Teilen zueinander arretiert sind.

In einem weiteren Schritt kann das dritte Teil über das Befestigungsmittel, insbesondere eine Rastverbindung an der Platte festgelegt werden. Dazu kann die Platte insbesondere an ihrem Umfang und im Eckbereich eine U-Umkantung aufweisen, wobei das dritte Teil mit einem freien Flansch der U-Umkantung eine Rastverbindung eingeht. Die Platte kann beispielsweise ein Blechformteil sein, welches lediglich durch Kanten und Stanzen hergestellt ist. Die U-Umkantung kann insbesondere im Eckbereich der Platte unterbrochen sein, um eine herstellungstechnisch aufwändige Umformung der Platte im Eckbereich zu verhindern. Das dritte Teil kann ein Dekorstück aufweisen, welches bei in die U-Umkantung eingesetztem drittem Teil die Unterbrechung der U-Umkantung in ästhetisch ansprechender Weise verschließt.

In einem weiteren Schritt können dann das dritte Teil und die bereits miteinander verbundenen ersten und zweiten Teile miteinander verbunden werden. Dazu können das erste und das zweite Teil in ihrer miteinander verbundenen Montageposition fluchtende Durchlässe aufweisen, über welche jeweils ein Schraubbolzen oder dergleichen durch das erste und das zweite Teil hindurch bis in das dritte Teil eingeschraubt werden kann, wozu das dritte Teil ein Innengewinde aufweisen kann. Es ist verständlich, dass auch die kinematische Umkehr von der Erfindung umfasst sein soll, wonach das Innengewinde in mindestens einem von erstem und zweitem Teil und die Durchgangsbohrung in dem dritten Teil ausgebildet ist.

Weitere Einzelheiten der Erfindung werden anhand der nachstehenden Figuren erläutert. Dabei zeigt:
- Figuren 1-3: in perspektivischer Darstellung drei verschiedene Ausführungsformen eines erfindungsgemäßen Möbels;
- Figur 4: in perspektivischer Darstellung eine beispielhafte Ausführungsform eines Rahmengestells für ein erfindungsgemäßes Möbel;
- Figur 5: in perspektivischer Explosionsdarstellung eine beispielhafte Ausführungsform eines erfindungsgemäßes Möbels im Eckbereich;
- Figur 6: in perspektivischer Darstellung eine beispielhafte Ausführungsform einer Platte eines erfindungsgemäßen Möbels sowie eins dritten Teils eines Eckverbinders für die Montage an der Platte;
- Figur 7: in perspektivischer Darstellung eine beispielhafte Ausführungsform zweier Rohrrahmen eines erfindungsgemäßen Möbels sowie ein erstes und ein zweites Teil eines Eckverbinders zur Festlegung der Rohrrahmen aneinander;
- Figur 8: in perspektivischer Darstellung eine beispielhafte Ausführungsform eines Montageprozesses zweier miteinander verbundener Rohrrahmen an einer Platte eines erfindungsgemäßen Möbels;
- Figur 9: in perspektivischer Darstellung eine beispielhafte Ausführungsform der Montage eines Seitenwandelements an einem erfindungsgemäßen Möbel; und
- Figur 10: in perspektivischer Darstellung eine beispielhafte Ausführungsform des Eckbereichs eines erfindungsgemäßen Möbels bei an dem Möbel fixiertem Seitenwandelement.

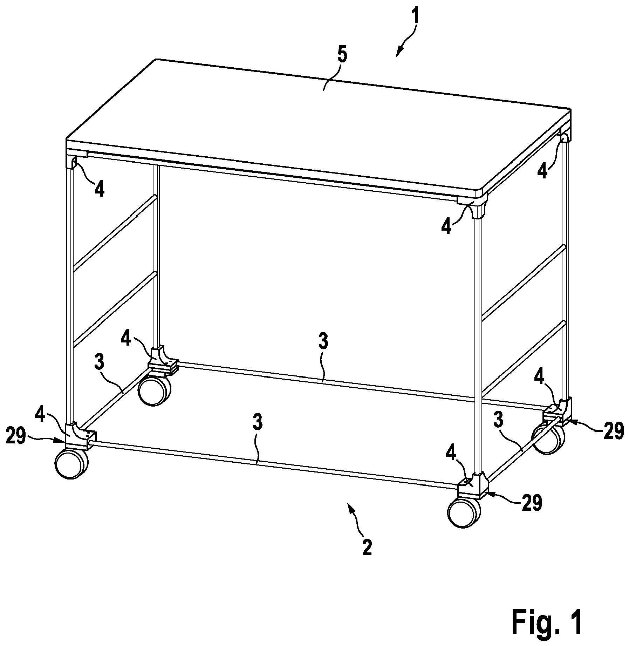

In den Figuren 1-3 sind drei beispielhafte Ausführungsformen eines erfindungsgemäßen Möbels 1 gezeigt. Die Möbel 1 zeichnen sich durch ihr Rahmengestell 2 aus, welches im Wesentlichen quaderförmige Außenabmessungen aufweist. Das Rahmengestell 2 ist aus vier ebenen Rohrrahmen 3 zusammengesetzt, die jeweils vertikal ausgerichtet sind, wobei in einem Eckbereich aneinandergrenzende Rohrrahmen 3 jeweils über einen Eckverbinder 4 senkrecht zueinander aneinander fixiert sind.

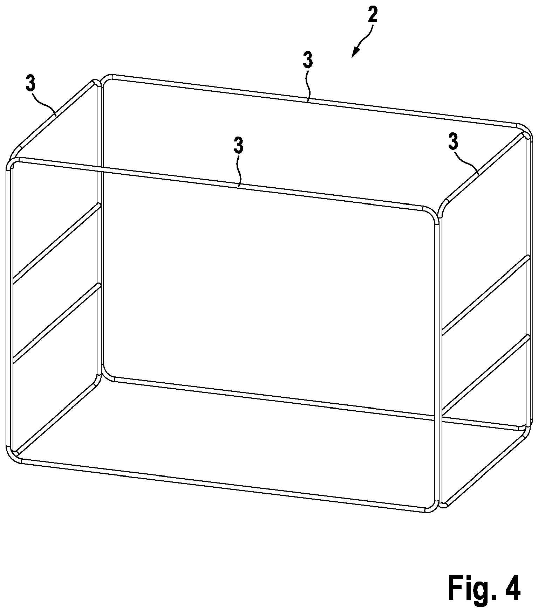

Ein entsprechendes Rahmengestell 2 ist in Figur 4 gezeigt. Die Oberseite des Rahmengestells 2 ist von einer Platte 5 bedeckt, die ebenfalls über die Eckverbinder 4 in den Eckbereichen des Rahmengestells 2 mit dem Rahmengestell 2 verbunden ist. Die bodenseitigen Eckverbinder 4 weisen an einer Schnittstelle 29 Befestigungsaufnahmen auf, um beispielsweise Transportrollen, Möbelfüße oder dergleichen festzulegen. Die Schnittstelle 29 kann eine Montageebene mit Befestigungsaufnahmen, etwa Gewindeaufnahmen aufweisen.

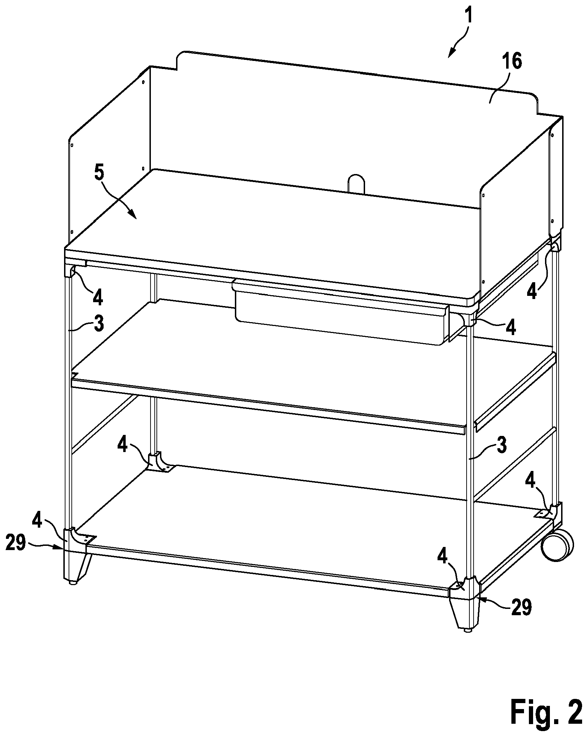

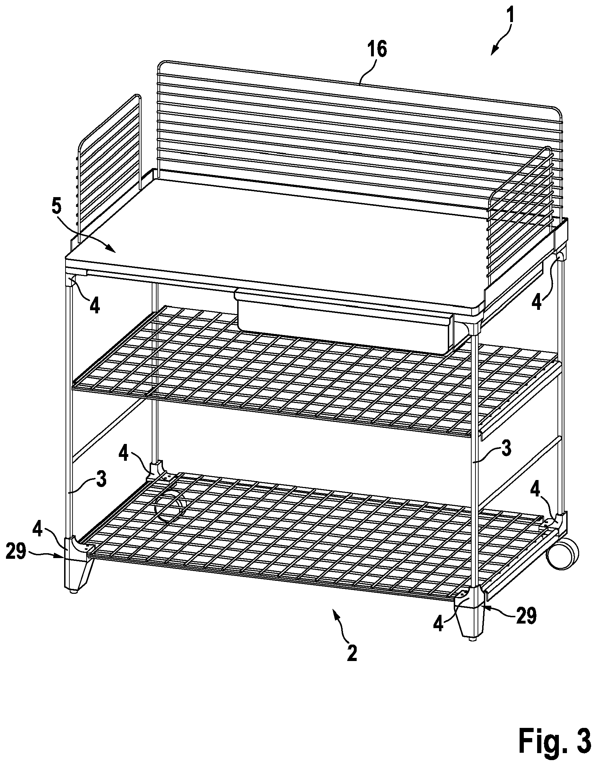

Sämtliche Eckverbinder 4 können als Gleichteile ausgebildet sein. Die in den Figuren 2 und 3 gezeigten Ausführungsformen unterscheiden sich insbesondere dadurch von der in Figur 1 gezeigten Ausführungsform, dass sie ein Seitenwandelement 16 aufweisen, welches ebenfalls über die vier oberen Eckverbinder 4 an dem Möbel fixiert ist. Einzelheiten dazu werden mit Bezug auf die nachfolgenden Figuren erläutert.

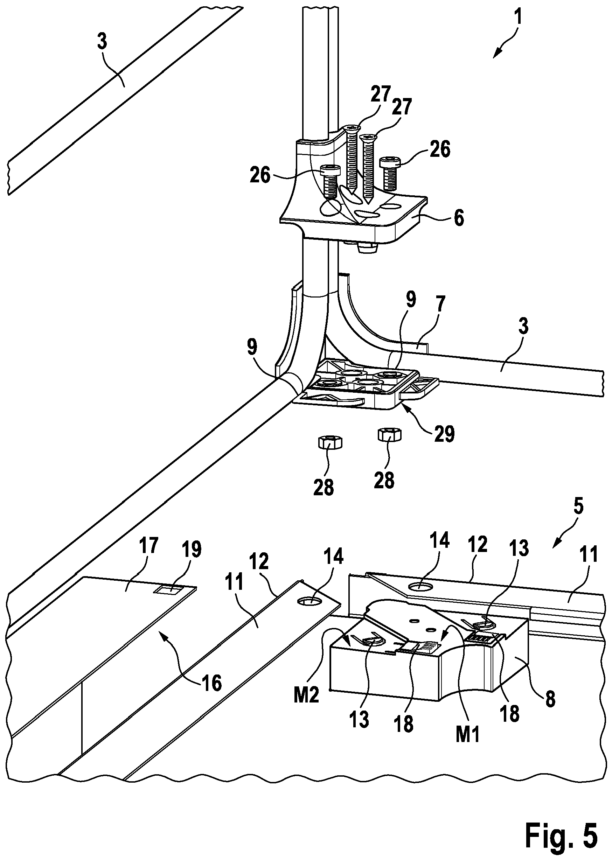

Wie in Figur 5 zu erkennen ist, weist der Eckverbinder 4 ein erstes Teil 6, ein zweites Teil 7 und ein drittes Teil 8 auf. Das dritte Teil 8 ist über seine Montageebene M1 an der Schnittstelle 29 des zweiten Teils 7 festgelegt, insbesondere verschraubt. Ein erstes Paar Schrauben 26 ist dazu vorgesehen, das erste Teil an dem zweiten Teil festzulegen und ein zweites Paar Schrauben 27 ist dazu vorgesehen, um die bereits miteinander verbundenen ersten und zweiten Teile 6, 7 an dem dritten Teil 8 festzulegen. Das zweite Teil 6, 7 kann an einer dem dritten Teil 8 zugewandten Seite als Formschlussaufnahme ausgebildete Sacklöcher für eine Mutter 28 aufweisen, über welche das erste und das zweite Teil 6, 7 mit Hilfe des ersten Paars Schrauben 26 miteinander verbunden werden kann.

Das erste und das zweite Teil 6, 7 weisen an ihren aneinander zugewandten Seiten jeweils einen Kanal 9 auf, in welcher die beiden rechtwinklig zueinander angeordneten Rohrrahmen 3 aufgenommen werden können, so dass die beiden Rohrrahmen 3 bei miteinander verschraubtem erstem und zweitem Teil 6, 7 in der durch den Formschluss vorgegebenen Ausrichtung zueinander fest fixiert sind. Dadurch, dass die Rohrrahmen 3 in einem Eckbereich von dem Eckverbinder 4 umschlossen werden, ist sichergestellt, dass der Eckverbinder 4 trotz der runden Geometrie der Rohrrahmen 3 unverschieblich an den Rohrrahmen 3 arretiert ist. Wenn das erste und das zweite Teil 6, 7 aneinander festgelegt sind, bilden diese zwischen sich den Kanal 9 aus, in welchem der jeweilige Rohrrahmen 3 formschlüssig aufgenommen ist.

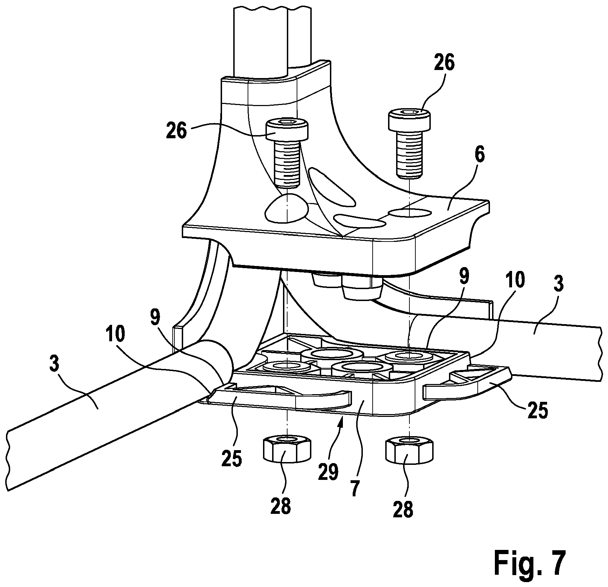

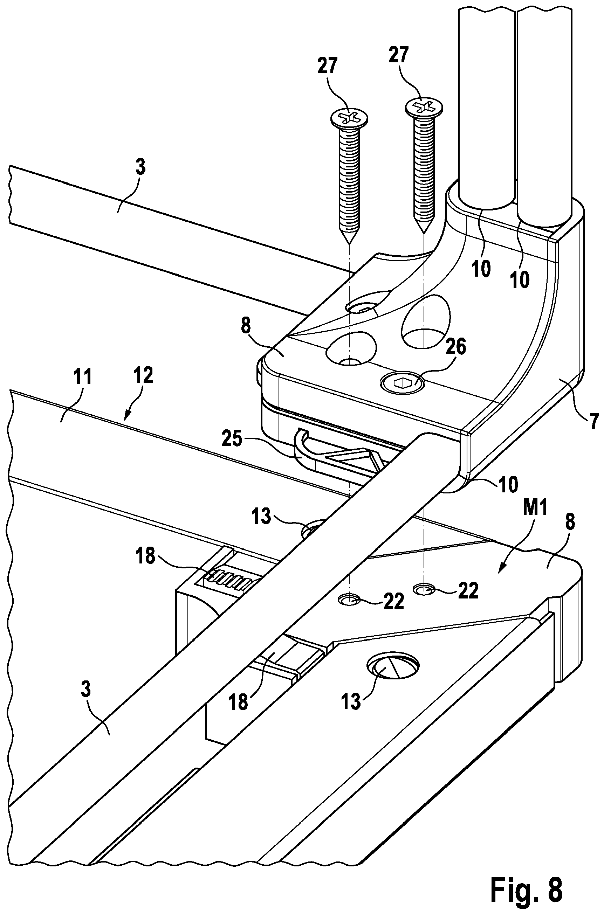

Der Eckverbinder 4 weist genau zwei Kanäle 9 auf, die jeweils eine erste Öffnung 10 aufweisen, wobei die Öffnungen 10 zu derselben Seite des Eckverbinders 4 geöffnet sind. Die Kanäle 9 weisen weiterhin jeweils eine zweite Öffnung 10 auf, die jeweils zu einer von zwei weiteren Seiten geöffnet sind. Die drei Seiten des Eckverbinders 4 stehen senkrecht zueinander. Vergleiche auch Figuren 7 und 8.

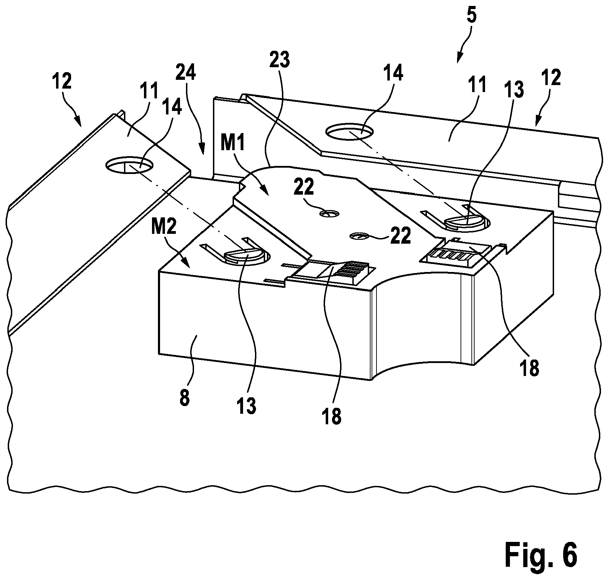

Die Figuren 5 und 6 veranschaulichen weiterhin die Montage des dritten Teils 8 im Eckbereich einer U-förmigen Umkantung 12 der Platte 5. Bei in die U-Umkantung 12 eingesetztem drittem Teil 8 umgreift die Umkantung 12 mit einem Flansch 11 der Umkantung 12 das dritte Teil 8. Das dritte Teil 8 weist an seiner weiteren Montageebene M2 ein Befestigungsmittel 13 auf, das als Rastmittel ausgebildet und relativ zu der weiteren Montageebene M2 zwischen einer Freigabeposition und einer Rastposition verschwenkbar ist. Das Rastmittel 13 ist als eine Rastnase ausgebildet, die an ihrem freien Ende ein Formschlussstück aufweist, welches bei in die U-Umkantung 12 eingesetztem dritten Teil 8 in eine Ausnehmung 14 in dem Flansch 11 formschlüssig eingreift und damit das dritte Teil 8 in der Montageposition im Eckbereich der Platte 5 arretiert.

Das dritte Teil 8 weist weiterhin eine erste Montageplatte M1 auf, mit der das dritte Teil über die Schnittstelle 29 an dem mindestens einen von erstem und zweitem Teil 6, 7 lösbar festgelegt werden kann. Die weitere Montageebene M2 ist gegenüber der ersten Montageebene M1 zurückversetzt. Auf der weiteren Montageebene M2 liegt die Platte 5 mit einem Flansch 11 einer das dritte Teil 8 umgreifenden U-Umkantung 12 auf, so dass der Flansch 11 mit der ersten Montageebene M1 fluchtet oder gegenüber der ersten Montageebene M1 zurückversetzt ist. So wird erreicht, dass die Montage der Platte 5 über die U-Umkantung 12, insbesondere den Flansch 11, die Montage eines weiteren ebenen Bauteils, etwas eines Seitenwandelements auf der ersten Montageebene M1 nicht behindert.

Die Figur 7 zeigt eine Detailansicht im Eckbereich eines erfindungsgemäßen Möbels, wobei lediglich das erste und das zweite Teil 6, 7 des Eckverbinders 4 sowie die in den Eckverbinder eingesetzten und senkrecht zueinander ausgerichteten Rohrrahmen 3 weiterhin zu erkennen sind. Wenn das in der Darstellung gemäß Figur 7 obere Teil 6, 7 auf das untere Teil 6, 7 abgesenkt wird, sind die beiden Rohrrahmen 3 formschlüssig zwischen den beiden Teilen 6, 7 aufgenommen. Durch die Verschraubung der beiden Teile aneinander mit ersten Schraubbolzen 26 können die beiden Rohrrahmen 3 in der gegebenen Ausrichtung zueinander arretiert werden.

Nachdem die beiden Rohrrahmen 3 über das erste und das zweite Teil 6, 7 in der mit Bezug auf Figur 7 beschriebenen Weise zueinander arretiert worden sind, können die beiden Rahmen 3 auf dem dritten Teil 8 verschraubt werden. Dazu weist der zusammengesetzte Teileckverbinder aus erstem und zweitem Teil 6, 7 fluchtende Durchgangsbohrungen und das dritte Teil korrespondierende Innengewinde 22 auf, über welche mit Hilfe von zweien Schraubbolzen 27 eine Schraubverbindung zwischen den drei Teilen 6, 7, 8 hergestellt werden und dadurch die Platte 5 an den Rohrrahmen 3 festgelegt werden kann.

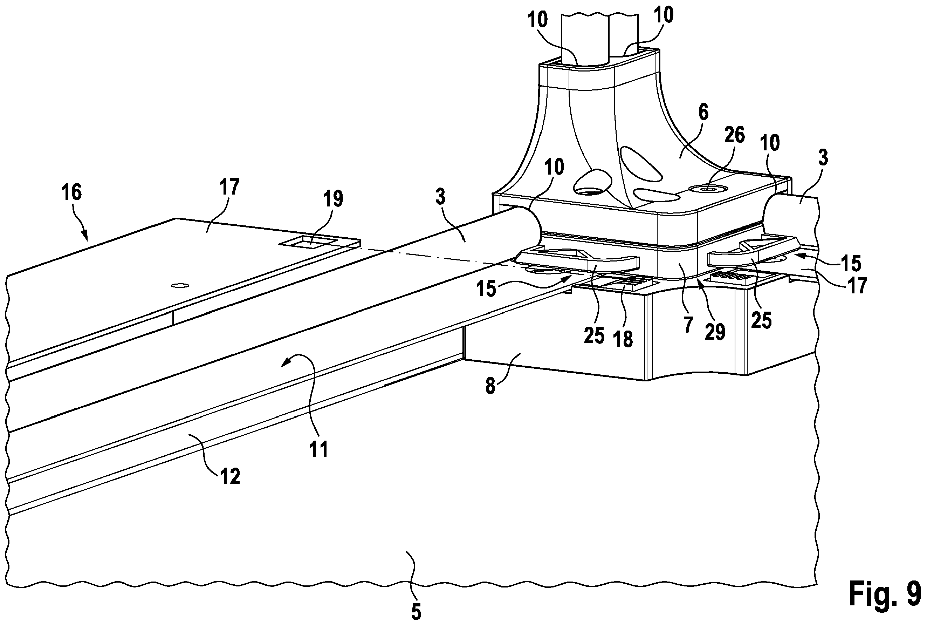

Nachdem auf die zuvor beschriebene Weise ein Rahmengestell 2 mit darauf aufgesetzter Platte 5 geschaffen wurde, beispielsweise ein Möbel, wie es in Figur 1 gezeigt ist, kann, wie es mit Bezug auf die Figur 9 veranschaulicht ist, bei Bedarf ein Seitenwandelement 16 an dem Möbel befestigt werden. Dazu ist zwischen dem dritten Teil 8 und einem von erstem und zweitem Teil 6, 7 ein Spalt 15 ausgebildet, in den das Seitenwandelement 16 des Möbels 1 eingesetzt ist. Der Spalt 15 kann zwischen einem Vorsprung 25 am Außenumfang desjenigen Teils von erstem und zweitem Teil 6, 7, das zwischen dem ersten und dem dritten Teil 8 angeordnet ist, und der weiteren Montageebene M2 ausgebildet sein, wozu die weitere Montageebene M2 senkrecht über den Außenumfang hinausragt.

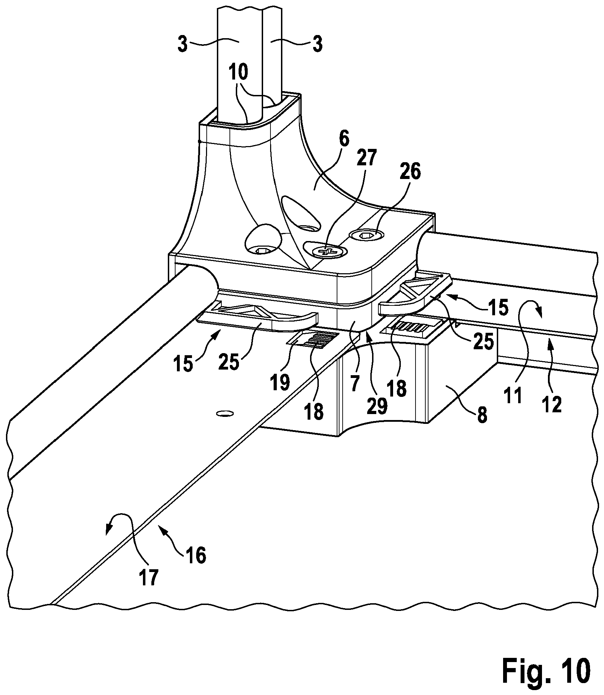

Bei der in Figur 9 dargestellten Ausführungsform greift das Seitenwandelement 16 mit einer L-Umkantung 17, die entlang einer horizontalen Unterkante des Seitenwandelements 16 ausgebildet ist, in den Spalt 15 ein. In der Zusammenschau der Figuren 9 und 10 ist zu erkennen, dass das dritte Teil 8 an seiner ersten Montageebene M1 ein weiteres Befestigungsmittel 18 aufweist, das als ein weiteres Rastmittel ausgebildet ist. Das Rastmittel ist relativ zu der ersten Montageebene M1 zwischen einer Freigabeposition und einer Rastposition verschwenkbar. Das weitere Befestigungsmittel kann analog zu dem ersten Befestigungsmittel zur Arretierung der Platte 5 ausgebildet sein.

Die L-Umkantung 17 weist eine Ausnehmung 19 auf, die als eine Durchgangsbohrung beziehungsweise ein rechteckiger Durchbruch ausgebildet ist, über welchen das weitere Befestigungsmittel 18 in Eingriff steht, wenn sich die L-Umkantung 17 in Bezug auf den Eckverbinder 4 in der Montageposition befindet. Die Montageposition ist in Figur 10 dargestellt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: Möbel
- 2: Rahmengestell
- 3: Rohrrahmen
- 4: Eckverbinder
- 5: Platte
- 6: erstes Teil
- 7: zweites Teil
- 8: drittes Teil
- 9: Kanal
- 10: Öffnung
- 11: Flansch
- 12: Umkantung
- 13: Befestigungsmittel
- 14: Ausnehmung
- 15: Spalt
- 16: Blechteil
- 17: L-Umkantung
- 18: Befestigungsmittel
- 19: Ausnehmung
- 20: Schraubverbindung
- 21: Durchgangbohrung
- 22: Innengewinde
- 23: Dekorstück
- 24: Unterbrechung
- 25: Vorsprung
- 26: erste Schraubbolzen
- 27: zweite Schraubbolzen
- 28: Mutter
- 29: Schnittstelle
- M1: erste Montageebene
- M2: weitere Montageebene

## Patentansprüche

1. Möbel (1) mit einem Rahmengestell (2) aus mehreren Rohr- oder Profilrahmen (3), von denen mindestens zwei Rohr- oder Profilrahmen (3) in einem Eckbereich des Rahmengestells (2) über einen mehrteiligen Eckverbinder (4) miteinander verbunden sind, wobei der Eckverbinder (4) ein erstes und ein zweites Teil (6, 7) aufweist, die lösbar miteinander verbunden und zwischen denen die mindestens zwei Rohr- oder Profilrahmen (3) gehalten sind, und wobei eines von erstem und zweitem Teil (6, 7) an einer von dem Rahmengestell (2) abgewandten Seite eine mechanische Schnittstelle (29) für die Befestigung eines Anbauteils (5) aufweist.

2. Möbel (1) nach Anspruch 1, bei dem das Anbauteil (5) eine in dem Eckbereich auf dem Rahmengestell (2) aufliegende Platte (5) ist, die über die Schnittstelle (29) mit dem Eckverbinder verbunden ist, wozu der Eckverbinder (4) ein drittes Teil (8) aufweist, das an der Platte (5) befestigt, vorzugsweise verrastet und über die Schnittstelle (29) an dem mindestens einen von erstem und zweitem Teil (6, 7) lösbar festgelegt ist.

3. Möbel (1) nach Anspruch 1 oder 2, bei dem die Rohr- oder Profilrahmen (3) umlaufend geschlossene Rohr- oder Profilrahmen (3) sind.

4. Möbel (1) nach Anspruch 3, bei dem das erste und das zweite Teil (6, 7) weisen zwischen sich je gehaltenem Rohr- oder Profilrahmen (3) einen Kanal (9) auf, in dem der jeweilige Rohr- oder Profilrahmen (3) formschlüssig aufgenommen ist.

5. Möbel (1) nach Anspruch 4, bei dem der Kanal (9) einen nichtlinearen Verlauf, vorzugsweise einen runden Verlauf mit zumindest abschnittsweise konstantem Radius aufweist.

6. Möbel (1) nach Anspruch 5, bei dem der Kanal (9) an seinen in Erstreckungsrichtung gegenüberliegenden Enden zu zwei unterschiedlichen Seiten des Eckverbinders (4) geöffnet ist.

7. Möbel (1) nach Anspruch 6, bei dem die beiden Seiten des Eckverbinders (4), zu denen der Kanal (9) geöffnet ist, senkrecht zueinander stehen.

8. Möbel (1) nach Anspruch 6 oder 7, bei dem die beiden Kanäle (9) jeweils eine erste Öffnung (10) aufweisen, die zu derselben Seite des Eckverbinders (4) geöffnet sind, wobei die Kanäle (9) jeweils eine zweite Öffnung (10) aufweisen, die jeweils zu einer von zwei weiteren Seiten geöffnet sind, wobei die drei Seiten vorzugsweise senkrecht zueinander angeordnet sind.

9. Möbel (1) nach einem der vorangegangenen Ansprüche, bei dem die mindestens zwei über den Eckverbinder (4) miteinander verbundenen Rohr- oder Profilrahmen (3) jeweils ein ebener Rechteckrahmen sind, wobei der jeweilige Rechteckrahmen in seinem Eckbereich einen gerundeten Verlauf aufweist.

10. Möbel (1) nach einem der Ansprüche 2 bis 9, bei dem das dritte Teil (8), das an der Platte (5) befestigt ist, eine erste Montageebene (M1) aufweist, über die das dritte Teil (8) mit seiner Schnittstelle (29) an dem mindestens einen von erstem und zweitem Teil (6, 7) lösbar festgelegt ist, und wobei das dritte Teil (8) eine weitere Montageebene (M2) aufweist, die gegenüber der ersten Montageebene (M1) zurückversetzt ist und auf welcher die Platte (5) mit einem Flansch (11) einer das dritte Teil (8) umgreifenden Umkantung (12) an ihrem Außenumfang aufliegt, so dass der Flansch (11) mit der ersten Montageseite (M1) fluchtet oder gegenüber der ersten Montageseite (M1) zurückversetzt ist.

11. Möbel (1) nach Anspruch 10, bei dem das dritte Teil (8) an seiner weiteren Montageebene (M2) ein Befestigungsmittel (13), vorzugsweise ein Rastmittel aufweist, das relativ zu der weiteren Montageebene (M2) zwischen einer Freigabeposition und einer Rastposition verschwenkbar ist.

12. Möbel (1) nach Anspruch 11, bei dem der Flansch (11) eine Ausnehmung (14), vorzugsweise eine Durchgangsbohrung aufweist, mit welcher das Befestigungsmittel (13), vorzugsweise das Rastmittel in Eingriff steht, wenn sich die Platte (5) in Bezug auf das dritte Teil (8) in einer Montageposition befindet.

13. Möbel (1) nach einem der vorangegangenen Ansprüche, bei dem die Platte (5) mit einem Flansch (11) einer Umkantung (12) an ihrem Außenumfang das dritte Teil (8) umgreift, wobei zwischen dem dritten Teil (8) und einem von erstem und zweitem Teil (6, 7) ein Spalt (15) gebildet ist, in das ein Blechteil (16) des Möbels (1), etwa ein Seitenwandelement, ein Anreihverbinder oder dergleichen eingesetzt ist.

14. Möbel (1) nach Anspruch 13, bei dem der Spalt (15) zwischen einem Vorsprung (25) am Außenumfang desjenigen Teils von erstem und zweitem Teil (6, 7), das die Schnittstelle (29) aufweist, und der weiteren Montageebene (M2) ausgebildet ist, wozu die weitere Montageebene (M2) senkrecht über den Außenumfang hinausragt.

15. Möbel (1) nach Anspruch 13 oder 14, bei dem das Seitenwandelement (16) mit einer L-Umkantung (17) entlang einer horizontalen Unterkante in den Spalt eingreift.

16. Möbel (1) nach einem der Ansprüche 11 bis 15, bei dem das dritte Teil (8) an seiner ersten Montageebene (M1) ein weiteres Befestigungsmittel (18), vorzugsweise ein Rastmittel aufweist, das relativ zu der ersten Montageebene (M1) zwischen einer Freigabeposition und einer Rastposition verschwenkbar ist.

17. Möbel (1) nach Anspruch 16, bei dem die L-Umkantung (17) eine Ausnehmung (19), vorzugsweise eine Durchgangsbohrung aufweist, mit welcher das weitere Befestigungsmittel (18), vorzugsweise das Rastmittel in Eingriff steht, wenn sich die L-Umkantung (17) in Bezug auf den Eckverbinder (4) in einer Montageposition befindet.

18. Möbel (1) nach einem der vorangegangenen Ansprüche, bei dem das erste und das zweite Teil (6, 7) über mindestens eine erste Schraubverbindung (20) miteinander verbunden sind, und wobei das erste und das zweite Teil (6, 7) fluchtende Durchgangsbohrungen (21) aufweisen, über die das erste und das zweite Teil (6, 7) über eine weitere Schraubverbindung (20) mit dem dritten Teil (8) verschraubt sind.
